# EUROPÄISCHE PATENTSCHRIFT

(11) **EP 3 803 926 B1**
(45) Veröffentlichungstag und Bekanntmachung des Hinweises auf die Patenterteilung: **10.05.2023**
(21) Anmeldenummer: 19728428.4
(22) Anmeldetag: 04.06.2019
(51) Int. Cl.: H01H 9/10, H01H 83/10, H01H 85/44, H01H 89/00, H01H 85/02, H01H 85/30, H01H 85/20

(54) **ÜBERSPANNUNGSSCHUTZGERÄTE-ENSEMBLE**
ASSEMBLY OF SURGE PROTECTION DEVICES
ENSEMBLE D'APPAREILS DE PROTECTION CONTRE DES SURTENSIONS

(30) Priorität: 04.06.2018 DE 102018208725
(43) Veröffentlichungstag der Anmeldung: 14.04.2021
(73) Patentinhaber: PHOENIX CONTACT GmbH & Co. KG, 32825 Blomberg (DE)
(72) Erfinder: WETTER, Martin, 32760 Detmold (DE); BERG, Peter, 33189 Schlangen (DE)
(74) Vertreter: RCD Patent Giesen, Schmelcher & Griebel Patentwanwälte PartG mbB
(86) Internationale Anmeldenummer: PCT/EP2019/064397
(87) Internationale Veröffentlichungsnummer: WO 2019/233970

(56) Entgegenhaltungen:
- EP-A1- 0 436 881
- DE-A1-102010 012 684
- GB-A- 2 490 351
- US-A1- 2004 087 215

## Beschreibung

Die Erfindung betrifft ein Überspannungsschutzgeräte-Ensemble.

### Hintergrund

In vielen Bereichen der elektrischen Installationstechnik werden Überspannungsschutzgeräte verwendet. Diese Überspannungsschutzgeräte bieten für nachliegende Geräte oder Anlagen einen Schutz vor Überspannungen.

Insbesondere im industriellen Umfeld werden Überspannungsschutzgeräte in Schaltschränken bzw. auf einer Montageschiene eingesetzt.

Dabei sind im Wesentlichen zwei verschiedene Arten von Überspannungsschutzgeräten vorzufinden. Eine erste Art beinhaltet neben einem Überspannungsschutzelement auch eine Sicherung während eine andere Art lediglich das Überspannungsschutzelement ohne eine weitere Sicherung beinhaltet.

Die Bereitstellung von Überspannungsschutzgeräten ohne Sicherung erlaubt es die Überspannungsschutzgeräte in höherer Stückzahl und damit kostengünstiger zu realisieren. Wird eine Sicherung benötigt, so wird eine solche zusätzliche Sicherung räumlich verdrahtet in der Nähe angebracht. D.h. es wird zusätzlicher Bauraum benötigt. Wird in einer bestehenden elektrischen Installation eine solche Sicherung nachgerüstet, so ist mit erheblichem Aufwand zu rechnen. Zudem ist der Bauraum häufig nicht ausreichend, sodass weitere Sicherungen nicht ohne weiteres auf einer Montageschiene platziert werden können.

Die Druckschrift US 2004/087215 A1 offenbart ein Überspannungsschutzgeräte-Ensemble, das dem Oberbegriff des Anspruchs 1 entspricht. Weitere ähnliche Gerate sind aus den Druckschriften GB 2 490 351 A, EP 0 436 881 A1, DE 10 2010 012684 A1 bekannt.

Ausgehend hiervon wäre es wünschenswert bei Erhalt der Kostengünstigkeit des Überspannungsschutzgerätes zusätzlich eine bauraumsparende Sicherung bereitstellen zu können, sodass diese flexibel eingesetzt werden können.

Die Lösung der Aufgabe erfolgt mittels eines Überspannungsschutzgeräte-Ensembles gemäß Anspruch 1. Weitere vorteilhafte Ausgestaltungen der Erfindung sind in den abhängigen Ansprüchen, der Beschreibung und in den Figuren angegeben.

### Kurzdarstellung der Figuren

Nachfolgend wird die Erfindung unter Bezugnahme auf die anliegende Zeichnung anhand bevorzugter Ausführungsformen näher erläutert.

Es zeigen
- Fig. 1a -1d: unterschiedliche Ansichten eines Aspektes gemäß Ausführungsformen der Erfindung,
- Fig. 2: eine seitliche Darstellung von Aspekten gemäß Ausführungsformen der Erfindung,
- Fig. 3: eine räumlich perspektivische Darstellung von Aspekten gemäß Ausführungsformen der Erfindung in einem ersten Zustand,
- Fig. 4: eine räumlich perspektivische Darstellung von Aspekten gemäß Ausführungsformen der Erfindung in einem zweiten Zustand,
- Fig. 5: eine räumlich perspektivische Darstellung von Aspekten gemäß Ausführungsformen der Erfindung in dritten Zustand, und
- Fig. 6: eine andere räumlich perspektivische Darstellung von Aspekten gemäß Ausführungsformen der Erfindung in dritten Zustand.

Nachfolgend wird die Erfindung eingehender (unter Bezugnahme auf die Figuren) dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Angaben mit Zahlenwerten sind in aller Regel nicht als exakte Werte zu verstehen, sondern beinhalten auch eine Toleranz von +/- 1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - zum Zeitpunkt der Prioritätsanmeldung gelten / galten, zu verstehen. Hiermit ist jedoch kein genereller Ausschluss der Anwendbarkeit auf nachfolgende oder ersetzende Standards oder Spezifikationen oder Normen zu verstehen.

"Benachbart" schließt im Nachfolgenden explizit eine unmittelbare Nachbarschaftsbeziehung ein ohne jedoch hierauf beschränkt zu sein. "Zwischen" schließt im Nachfolgenden explizit eine Lage ein, in der das zwischenliegende Teil eine unmittelbare Nachbarschaft zu den umgebenden Teilen aufweist.

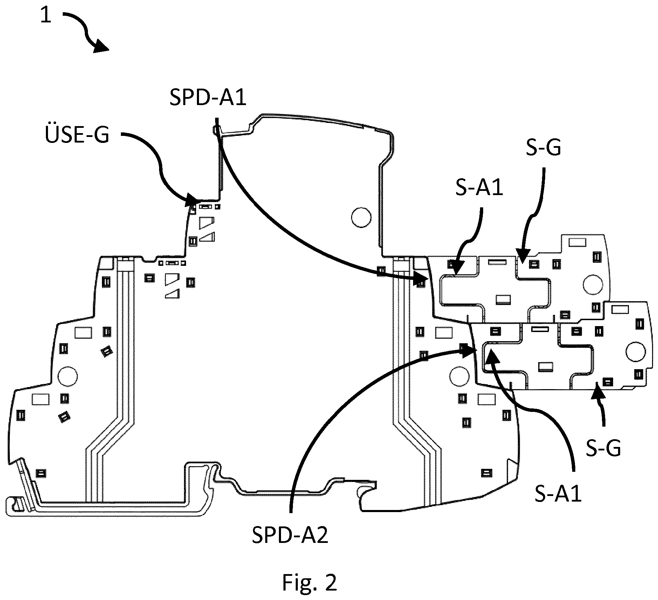

In Figur 2 ist ein Überspannungsschutzgeräte-Ensemble 1 gezeigt. Ein solches Überspannungsschutzgeräte-Ensemble 1 weist ein Überspannungsschutzgerät SPD mit einer Überspannungsschutzeinrichtung ÜSE in einem ersten Gehäuse SPD-G auf.

Das Überspannungsschutzgerät SPD kann wie aus Figur 2 ersichtlich mechanische Einrichtungen zur Befestigung auf einer Montageschiene enthalten. Weiterhin kann das Überspannungsschutzgerät SPD Einrichtungen zur elektrischen Kontaktierung eines Potentialleiters, z.B. der Montageschiene enthalten. Diese elektrische Kontaktierung kann beispielsweise auch mit der mechanischen Einrichtung zur Befestigung auf einer Montageschiene kombiniert oder in diese integriert sein. Der innere elektrische Schaltungsaufbau des Überspannungsschutzgerätes SPD kann geeignet ausgestaltet sein.

Das Überspannungsschutzgerät kann Anschlüsse für ein oder mehrere unterschiedliche geschützte / ungeschützte Potentiale zur Verfügung stellen. Das erste Gehäuse SPD-G des Überspannungsschutzgeräte-Ensembles 1, d.h. das Gehäuse des Überspannungsschutzgerätes SPD, weist mindestens zwei Anschlüsse SPD-A1, SPD-A2 zur Kontaktierung der Überspannungsschutzeinrichtung ÜSE auf.

Weiterhin weist das Überspannungsschutzgeräte-Ensemble 1 mindestens ein Sicherungsmodul S mit einer Sicherung F in einem zweiten Gehäuse S-G auf. In der Figur sind beispielhaft zwei Sicherungsmodule S in einer formschlüssigen Anordnung zueinander gezeigt.

Das zweite Gehäuse S-G des Überspannungsschutzgeräte-Ensemble 1 , d.h. das Gehäuse des Sicherungsmoduls S, weist mindestens zwei Anschlüsse S-A1, S-A2 zur Kontaktierung der Sicherung F auf. Das zweite Gehäuse S-G kann mit einem der Anschlüsse, im vorliegenden Fall mit dem linken Anschluss S-A1 des Sicherungsmoduls S formschlüssig in einen Anschluss, z.B. Anschluss A1 oder Anschluss A2 der zumindest beiden Anschlüsse A1, A2 des Überspannungsschutzgerätes SPD eingebracht werden. Ist ein Sicherungsmodul S so eingebracht, wird auf der eingebrachten Seite eine elektrische Verbindung zwischen dem Sicherungsmodul S und dem Überspannungsschutzgerät SPD zur Verfügung gestellt.

D.h. das Sicherungsmodul S / die Sicherungsmodule S können nunmehr auch nachträglich an Überspannungsschutzgeräten SPD angebracht werden. Da die Sicherungsmodule z.B. anstatt eines direkten Leiteranschlusses eingesetzt werden können, wird kein zusätzlicher Bauraum in der Nähe / neben dem Überspannungsschutzgerät SPD benötigt. D.h. auch in engen Bauräumen kann das Ensemble Verwendung finden und erlaubt so eine flexible Ausrüstung eines Leiters mit einer Sicherung S.

Solche Sicherungsmodule S bieten gerade in Anwendungen mit hohen Betriebsspannungen und Strömen einen wesentlichen Vorteil.

Erfindungsgemäß wird es vorgesehen, dass beim vorgestellten Überspannungsschutzgeräte-Ensemble 1 die Sicherungsmodule formschlüssig sind. Dabei kann das Sicherungsmodul S sowohl formschlüssig an ein Überspannungsschutzgerät SPD auf mindestens einen von zwei oder mehreren Anschlüssen aufgesteckt werden. Alternativ oder zusätzlich kann aber auch eine Anordnung von zwei (oder mehreren) Sicherungsmodulen S untereinander als auch in Bezug auf das Überspannungsschutzgerät SPD formschlüssig ausgestaltet sein, sodass eine einfach Montage ermöglicht wird. Dies wird z.B. durch die Außenkontur der Elemente des Überspannungsschutzgeräte-Ensembles 1 erreicht. Dies ist bevorzugt so ausgeführt, dass die Sicherungsmodule S bei der vorbestimmten Anordnung übereinander so ineinander greifen, dass zuerst das untere Sicherungsmodul S angeklemmt und dann im zweiten Schritt das obere Sicherungsmodul S angeschlossen werden kann. Die Sicherungsmodule S greifen nun in ihrer Außenkontur platzsparend ineinander.

Das (jeweilige) Sicherungsmodul S kontaktiert elektrisch eine der vorhandenen Anschlussklemmen des Überspannungsschutzgerätes SPD und stellt wiederum eine weitere Anschlussklemme für den Anschluss eines Leiters bereit. D.h., wird ein Sicherungsmodul S nachgerüstet, so kann der bisherige Leiter aus dem entsprechenden Anschluss SPD-A1, SPD-A2 entnommen werden, anschließend kann das Sicherungsmodul in den so frei gewordenen Anschluss eingesetzt (und eventuell gesichert) werden. Am Sicherungsmodul S kann dann der bisherige Leiter in den Anschluss S-A2 eingesetzt (und eventuell gesichert) werden. D.h. der Kunde kann je nach Applikation entscheiden, ob er entweder eine oder sogar mehrere Pfade mit einem Sicherungsmodul S versieht.

Besonders vorteilhaft ist das Sicherungsmodul S so ausgestaltet, dass es an alle Anschlüsse des Überspannungsschutzgerätes SPD angeschlossen werden kann.

Die Anschlüsse SPD-A1, SPD-A2 als auch der Anschluss SPD-A2 können geeignete Sicherungseinrichtungen aufweisen. Beispielsweise können Verschraubungen oder Klemmungen, wie die Push-In-Technik der Anmelderin, vorgesehen sein. Der Anschluss S-A1 des Sicherungsmoduls S kann z.B. aus einem geeigneten Stanzteil gefertigt sein, das einen entsprechenden Querschnitt für die zu tragenden Nennströme aufweist.

Von besonderem Vorteil ist, dass das Sicherungsmodul S auch ein im Wesentlichen einstückiges Gehäuse aufweisen kann.

Gemäß der Erfindung ist das Sicherungsmodul S so ausgeführt, dass es in jeden der Anschlüsse SPD-A1, SPD-A2 des Überspannungsschutzgerätes SPD eingeführt werden kann. Ohne Beschränkung der Allgemeinheit kann es jedoch auch vorgesehen sein, dass eine bestimmte Reihenfolge eingehalten muss. Dies ist aber nicht zwingend notwendig und kann durch eine geeignete Ausgestaltung des Sicherungsmoduls S auch anders gestaltet sein.

Erfindungsgemäß wird das Überspannungsschutzgerät SPD so gestaltet, dass in jeden der Anschlüsse SPD-A1, SPD-A2, .... ein gleichartiges Sicherungsmodul S formschlüssig eingeführt werden kann. Hierdurch kann die Anzahl von möglichen Sicherungsmodulen gering gehalten werden, wodurch niedrige Herstellungskosten ermöglicht werden. Zudem wird die Montage erleichtert, da nunmehr keine Verwechslungen und damit mögliche Fehlmontagen mehr möglich sind.

Wie bereits beschrieben kann das Überspannungsschutzgerät SPD Befestigungselemente für eine Tragschiene aufweisen. D.h., das Überspannungsschutzgeräte-Ensemble 1 kann in typische Schaltschränke eingebaut werden. Jedoch können auch andere Befestigungen alternativ oder zusätzlich vorgesehen sein, z.B. Verschraubungen oder dergleichen.

In einer weiteren Ausführungsform der Erfindung weist das Überspannungsschutzgerät SPD und/oder das Sicherungsmodul S / die Sicherungsmodule S eine Baubreite von weniger als 7 mm, besonders bevorzugt 6,2 mm oder weniger auf.

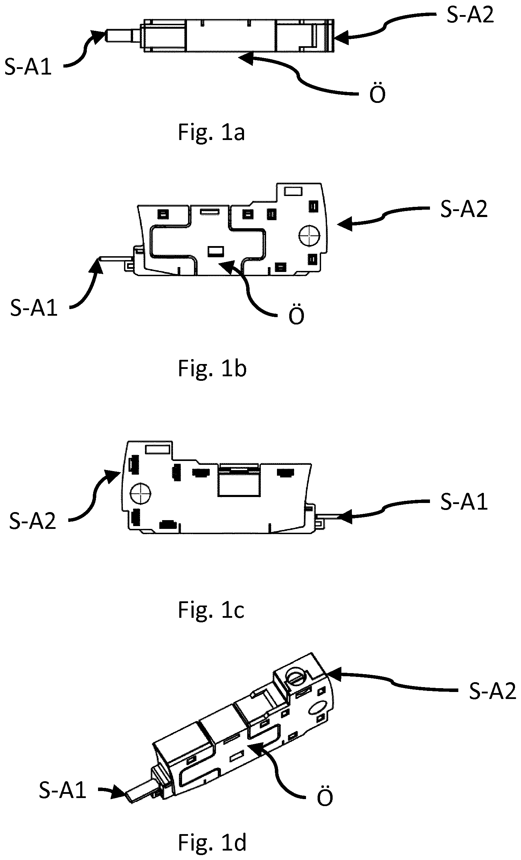

Gemäß einer weiteren Ausführungsform der Erfindung weist das Überspannungsschutzgerät SPD und das Sicherungsmodul S kooperierende Halteelemente auf, die eine lösbare Verbindung zur Verfügung stellen. Beispielsweise kann der Anschluss S-A1 stiftartig ausgeführt sein, sodass er in einen entsprechend ausgestalteten buchsenartigen Anschluss SPD-A1, SPD-A2 eingeführt werden kann. Beispielsweise kann der buchsenartige Anschluss SPD-A1, SPD-A2 ein Push-in-Terminal oder ein Schraubterminal sein. In gleicher Art und Weise wie der buchsenartige Anschluss SPD-A1, SPD-A2 kann der Anschluss S-A2 des Sicherungsmoduls S ausgeführt sein. Beispielsweise kann, wie z.B. aus Figur 1d, 3-6 ersichtlich ist, der Anschluss S-A2 des Sicherungsmoduls S als Schraubterminal ausgebildet sein.

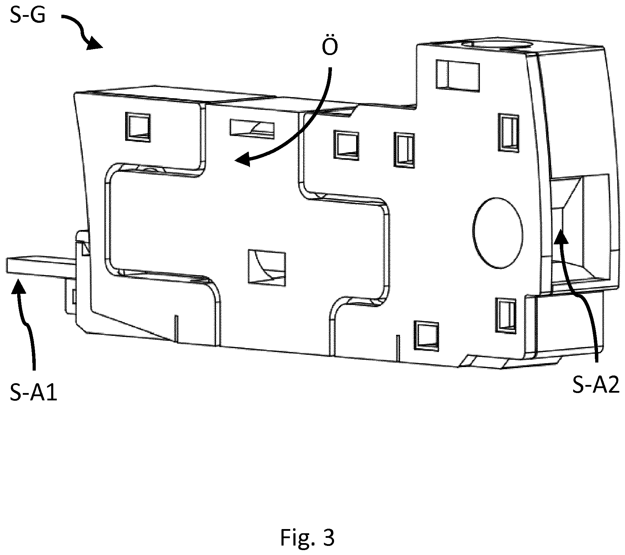

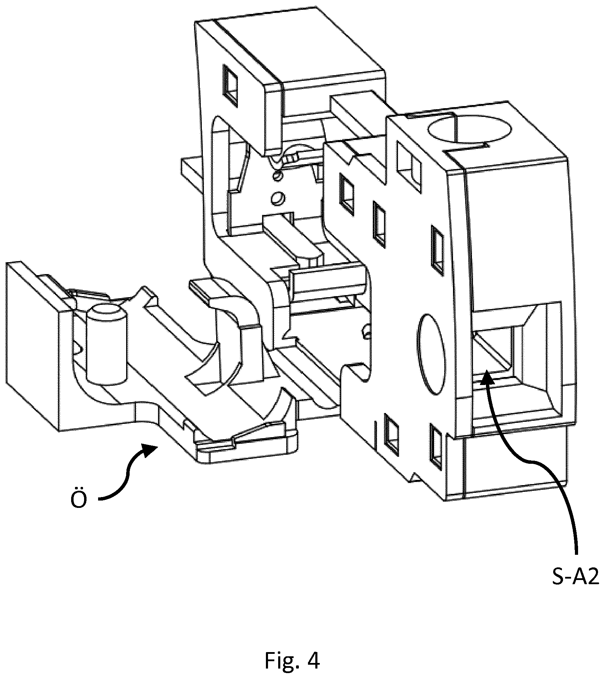

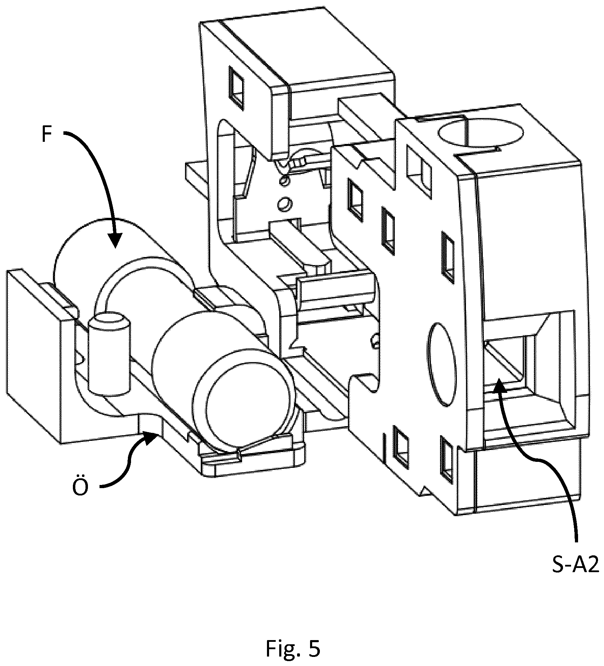

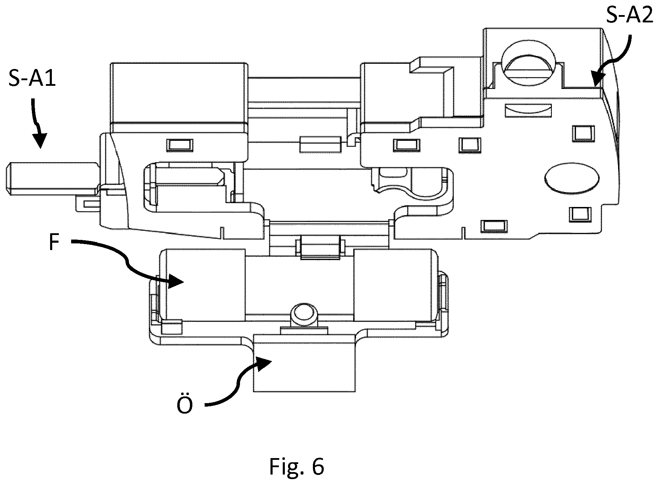

In einer weiteren Ausführungsform der Erfindung weist das Gehäuse S-G des Sicherungsmoduls S eine Öffnung Ö auf, durch die eine Sicherung F eingelegt und/oder entnommen werden kann. D.h. die Sicherung kann abhängig vom Verwendungszweck im Feld konfektioniert werden. Ebenso kann die Sicherung im Fehlerfall auch gewechselt werden. D.h. die Konstruktion erlaubt eine kostengünstige Montage als auch eine kostengünstige Reparatur. Hierzu sei auf Figuren 3-6 verwiesen. Dabei ist aus Figur 3 das Sicherungsmodul S in einem Zustand mit geschlossener Öffnung und eingesetzter Sicherung F, d.h. bereit zur Montage, gezeigt. In Figur 4 ist das Sicherungsmodul S mit geöffneter Öffnung Ö und entnommener Sicherung F gezeigt. Figur 5 wiederum zeigt den geöffneten Zustand mit eingelegter Sicherung F in einer schrägen Seitenansicht während Figur 6 eine seitlich erhöhte Aufsicht zeigt. Hierbei sind die in das Sicherungsmodul S integrierten elektrischen Kontaktelemente ersichtlich, die in elektrischem Kontakt mit den Anschlüssen S-A1 und S-A2 stehen. Bei Schließen der Öffnung Ö mit eingelegter Sicherung F werden die entsprechenden elektrischen Kontakte zur Sicherung F hergestellt. Wie aus den Figuren 3-6 ersichtlich ist kann die Öffnung Ö scharnierartig ausgeführt sein.

Ohne Beschränkung der Allgemeinheit kann die Öffnung Ö eine Klappöffnung oder ein Drehöffnung oder eine Schieböffnung sein.D.h. das Sicherungsmodul S kann mit einem einstückigen Gehäuse S-G ausgestaltet sein, das das Wechseln der Sicherung F ermöglicht. Dies kann z.B. durch ein vorgesehenes Doppelfilmscharnier an der Öffnung Ö realisiert werden. D.h. die Öffnung Ö kann durch einen einteiligen Verschluss gedeckelt werden. Weiterhin kann das Gehäuse S-G des Sicherungsmoduls S eine Statusanzeige der Sicherung F aufweisen. Diese Statusanzeige wird durch ein seitliches Sichtfenster zur Verfügung gestellt. Ein Sichtfenster kann dabei auf der Seite der Öffnung Ö und/oder auf der gegenüberliegenden Seite angeordnet sein. Andere Orte wie die Oberseite und die Unterseite (z.B. in Bezug auf die Darstellung in Fig. 1a-d) sind jedoch ebenso alternativ oder zusätzlich möglich. Es sei angemerkt, dass für den Fall, dass mehrere Sicherungsmodule S nebeneinander angeordnet sind, z.B. bei zwei nebeneinander angeordneten Überspannungsschutzgeräten SPD, die Möglichkeit zur direkten Ablesung eines Status der Sicherung F nicht immer gegeben sein kann. In diesem Fall kann durch Entnahme / Abziehen des Sicherungsmodules die entsprechende Sicherung F ohne weiteres kontrolliert werden.

Gemäß der Erfindung weist das Überspannungsschutzgeräte-Ensemble 1 zwei Sicherungsmodule S auf, wobei die zwei Sicherungsmodule S in jeweils einen der zwei Anschlüsse des Überspannungsschutzgerätes SPD eingebracht sind, wobei die zwei Sicherungsmodule S formschlüssig anordenbar sind.

D.h. die Sicherungsmodule S können ineinandergreifen und sich somit auch gegenseitig abstützen. Dadurch können höhere mechanische Kräfte aufgenommen werden, was die Robustheit erheblich steigert.

### Bezeichnungsliste

- 1: Überspannungsschutzgeräte-Ensemble
- SPD: Überspannungsschutzgerät
- ÜSE: Überspannungsschutzeinrichtung
- SPD-G: Gehäuse
- SPD-A1, SPD-A2: Anschlüsse
- S: Sicherungsmodul
- F: Sicherung
- S-G: Gehäuse
- S-A1, S-A2: Anschlüsse
- Ö: Öffnung

## Patentansprüche

1. Überspannungsschutzgeräte-Ensemble (1) aufweisend ein Überspannungsschutzgerät (SPD) mit einer Überspannungsschutzeinrichtung (ÜSE) in einem ersten Gehäuse (SPD-G), wobei das erste Gehäuse (SPD-G) mindestens zwei Anschlüsse (SPD-A1, SPD-A2) zur Kontaktierung der Überspannungsschutzeinrichtung (ÜSE) aufweist, wobei das Überspannungsschutzgeräte-Ensemble (1) weiterhin ein Sicherungsmodul (S) mit einer Sicherung (F) in einem zweiten Gehäuse (S-G) aufweist, wobei das zweite Gehäuse (S-G) mindestens zwei Anschlüsse (S-A1, S-A2) zur Kontaktierung der Sicherung (F) aufweist, wobei das zweite Gehäuse (S-G) mit einem der Anschlüsse (S-A1) des Sicherungsmoduls (S) formschlüssig in einen Anschluss (A1; A2) der zumindest beiden Anschlüsse (A1, A2) des Überspannungsschutzgerätes (SPD) eingebracht ist, wobei das Sicherungsmodul (S) auf der eingebrachten Seite das Sicherungsmodul (S) und das Überspannungsschutzgerät (SPD) elektrisch verbindet, **dadurch gekennzeichnet, dass** das Sicherungsmodul (S) in jeden der Anschlüsse (SPD-A1, SPD-A2) eingeführt werden kann, wobei in jeden der Anschlüsse ein gleichartiges Sicherungsmodul (S) formschlüssig eingeführt ist, wobei das Überspannungsschutzgeräte-Ensemble (1) zwei Sicherungsmodule (S) aufweist, wobei die zwei Sicherungsmodule in jeweils einen der zwei Anschlüsse des Überspannungsschutzgerätes (SPD) eingebracht sind, wobei die zwei Sicherungsmodule zueinander formschlüssig anordenbar sind.

2. Überspannungsschutzgeräte-Ensemble (1) nach Anspruch 1, **dadurch gekennzeichnet, dass** das Überspannungsschutzgerät (SPD) Befestigungselemente für eine Tragschiene aufweist.

3. Überspannungsschutzgeräte-Ensemble (1) nach einem der vorhergehenden Ansprüche, **dadurch gekennzeichnet, dass** sowohl das Überspannungsschutzgerät (SPD) als auch das Sicherungsmodul (S) eine Baubreite von weniger als 7 mm aufweist.

4. Überspannungsschutzgeräte-Ensemble (1) nach einem der vorhergehenden Ansprüche, **dadurch gekennzeichnet, dass** sowohl das Überspannungsschutzgerät (SPD) als auch das Sicherungsmodul (S) eine Baubreite von 6.2 mm aufweist.

5. Überspannungsschutzgeräte-Ensemble (1) nach einem der vorhergehenden Ansprüche, **dadurch gekennzeichnet, dass** das Überspannungsschutzgerät (SPD) und das Sicherungsmodul (S) kooperierende Halteelemente aufweisen, die eine lösbare Verbindung zur Verfügung stellen.

6. Überspannungsschutzgeräte-Ensemble (1) nach einem der vorhergehenden Ansprüche, **dadurch gekennzeichnet, dass** das Gehäuse (S-G) des Sicherungsmoduls (S) eine Öffnung (Ö) aufweist, durch die eine Sicherung (F) eingelegt und/oder entnommen werden kann.

7. Überspannungsschutzgeräte-Ensemble (1) nach Anspruch 5, **dadurch gekennzeichnet, dass** die Öffnung eine Klappöffnung, Drehöffnung, Schieböffnung ist.

8. Überspannungsschutzgeräte-Ensemble (1) nach Anspruch 5, **dadurch gekennzeichnet, dass** die Öffnung (Ö) durch einen einteiligen Verschluss gedeckelt werden kann.

9. Überspannungsschutzgeräte-Ensemble (1) nach einem der vorhergehenden Ansprüche, **dadurch gekennzeichnet, dass** das Gehäuse (S-G) des Sicherungsmoduls (S) eine Statusanzeige der Sicherung (F) aufweist.

## Claims

1. Surge protection device ensemble (1) comprising a surge protection device (SPD) comprising an overvoltage protection means (USE) in a first housing (SPD-G), wherein the first housing (SPD-G) comprises at least two connections (SPD-A1, SPD-A2) for contacting the overvoltage protection means (USE), wherein the surge protection device ensemble (1) also comprises a fuse module (S) comprising a fuse (F) in a second housing (S-G), wherein the second housing (S-G) comprises at least two connections (S-A1, S-A2) for contacting the fuse (F), wherein the second housing (S-G) having one of the connections (S-A1) of the fuse module (S) inserted in a form-fitting manner in one connection (A1; A2) of the at least two connections (A1, A2) of the surge protection device (SPD), wherein the fuse module (S) on the inserted side electrically connects the fuse module (S) and the surge protection device (SPD), **characterized in that** the fuse module (S) may be inserted into each of the connections (SPD-A1, SPD-A2), wherein a similar fuse module (S) is inserted in a form-fitting manner into each of the connections, wherein the surge protection device ensemble (1) comprises two fuse modules (S), wherein the two fuse modules are each inserted into one of the two connections of the surge protection devices (SPD), wherein the two fuse modules may be arranged in a form-fitting manner with respect to each other.

2. Surge protection device ensemble (1) according to one of the preceding claims, **characterized in that** the surge protection device (SPD) comprises attachment elements for a support rail.

3. Surge protection device ensemble (1) according to one of the preceding claims, **characterized in that** both the surge protection device (SPD) and the fuse module (S) offers an overall width of less than 7 mm.

4. Surge protection device ensemble (1) according to one of the preceding claims, **characterized in that** both the surge protection device (SPD) and the fuse module (S) offers an overall width of 6.2 mm.

5. Surge protection device ensemble (1) according to one of the preceding claims, **characterized in that** the surge protection device (SPD) and the fuse module (S) comprises cooperating holding elements, which provide a detachable connection.

6. Surge protection device ensemble (1) according to one of the preceding claims, **characterized in that** the housing (S-G) of the fuse module (S) comprises an opening (Ö) through which a fuse (F) can be inserted and/or removed.

7. Surge protection device ensemble (1) according to claim 5, **characterized in that** the opening is a flap opening, twist opening or slide opening.

8. Surge protection device ensemble (1) according to claim 5, **characterized in that** the opening (Ö) can be capped by a one-piece closure.

9. Surge protection device ensemble (1) according to one of the preceding claims, **characterized in that** the housing (S-G) of the fuse module (S) has a status indicator of the fuse (F).

## Revendications

1. Ensemble de dispositif de protection contre les surtensions (1) comprenant un appareil de protection contre les surtensions (SPD) avec un dispositif de protection contre les surtensions (ÜSE) dans un premier boîtier (SPD-G), dans lequel le premier boîtier (SPD-G) comprends au moins deux connecteurs (SPD-A1, SPD-A2) pour contacter le dispositif de protection contre les surtensions (ÜSE), dans lequel l'ensemble de dispositif de protection contre les surtensions (1) comprends en outre un module de fusible (S) avec un fusible (F) dans un deuxième boîtier (S-G), dans lequel le deuxième boîtier (S-G) comprends au moins deux connexions (S-A1, S-A2) pour contacter le fusible (F), dans lequel le deuxième boîtier (S-G) est inséré avec une des connexions (S-A1) du module de fusible (S) par conjonction de forme dans une connexion (A1; A2) d'au moins une des deux connexions (A1, A2) de l'appareil de protection contre les surtensions (SPD), dans lequel le module de fusible (S) sur le côté inséré connecte électriquement le module de fusible (S) et le dispositif de protection contre les surtensions (SPD), **caractérisé en ce que** le module de fusible (S) peut être inséré dans chacune des connexions (SPD-A1, SPD-A2), dans lequel dans chacune des connexions un module de fusible similaire (S) est inséré par conjonction de forme, dans lequel l'ensemble de dispositif de protection contre les surtensions (1) comprends deux modules de sécurité (S), dans lequel les deux modules de sécurité sont introduits dans respectivement une des deux connexions d'appareil de protection contre les surtensions (SPD), dans lequel les deux modules de fusibles peuvent être agencés par conjonction de forme les uns par rapport aux autres.

2. Ensemble de dispositif de protection contre les surtensions selon la revendication 1, **caractérisé en ce que** l'appareil de protection contre les surtensions (SPD) comporte des éléments de fixation pour un rail de montage.

3. Ensemble de dispositif de protection contre les surtensions (1) selon une des revendications précédentes, **caractérisé en ce que** tant l'appareil de protection contre les surtensions (SPD) que le module de fusible (S) présente une largeur de montage inférieure à 7 mm.

4. Ensemble de dispositif de protection contre les surtensions (1) selon une des revendications précédentes, caractérises-en ce que tant le dispositif de protection contre les surtensions (SPD) que le module de fusible (S) présente une largeur de montage de 6,2 mm.

5. Ensemble de dispositif de protection contre les surtensions (1) selon une quelconque des revendications précédentes, **caractérisé en ce que** le dispositif de protection contre les surtensions (SPD) et le module de fusible (S) comprends des éléments de maintien coopérants, qui fournissent une liaison amovible.

6. Ensemble de dispositif de protection contre les surtensions (1) selon une des revendications précédentes, **caractérisé en ce que** le boîtier (S-G) du module de fusible (S) comprends une ouverture (Ö) à travers laquelle un fusible (F) peut être placé et/ou retiré.

7. Ensemble de dispositif de protection contre les surtensions (1) selon la revendication 5, **caractérisé en ce que** l'ouverture est une ouverture battante, une ouverture rotative, une ouverture coulissante.

8. Ensemble de dispositif de protection contre les surtensions (1) selon la revendication 5, **caractérisé en ce que** l'ouverture (Ö) peut être recouverte par une fermeture monobloc.

9. Ensemble de dispositif de protection contre les surtensions (1) selon une quelconque des revendications précédentes, **caractérisé en ce que** le boîtier (S-G) du module de fusible (S) comprends un indicateur d'état du fusible (F).
